# EUROPEAN PATENT APPLICATION

(11) **EP 2 942 382 A1**
(43) Date of publication of application: **11.11.2015**
(21) Application number: 15460014.2
(22) Date of filing: 05.05.2015
(51) Int. Cl.: C10G 1/02, C10B 1/10, C10B 47/30, C10B 53/00, C10B 53/07, C10G 1/10

(54) **METHOD FOR THE THERMAL DECOMPOSITION OF ELASTOMERIC WASTE, IN PARTICULAR TIRES, AND A PLANT FOR THE IMPLEMENTATION OF THIS METHOD**

(30) Priority: 06.05.2014 PL 40812314
(71) Applicant: WGW Green Enery Poland Sp. z o.o., 05-092 Lomianki (PL)
(72) Inventor: Wolosiak, Stefan, 08-110 Siedlce (PL); Krasnodebski, Tomasz, 07-100 Wegrów (PL); Wyszynski, Dariusz, 05-255 Zalubice (PL); Wojciechowski, Andrzej, 05-120 Legionowo (PL); Kaliszyk, Zbigniew, 02-943 Warszawa (PL)
(74) Representative: Suszek, Aleksander

(57) **Abstract**

The method for air-sealed thermal decomposition of elastomer waste, especially tires, consists in that the thermal decomposition is carried out in an indirectly heated reactor with a horizontal axis of rotation with a movable bed at a temperature 320-400°C and at a pressure in the range between atmospheric pressure and gauge pressure up to 0.5 bar, whereas during the loading of the reactor with waste raw material there is added the heaviest fraction from the products separation system in the amount of approx. 0,2-0,5% by weight of the waste raw material, and the same amount of water.

The plant for the thermal decomposition of elastomer waste, in particular tires, comprises a rotating steel reactor (1) completely enveloped in a thermally insulated shell (2), a product separator (13), and, preferably, a system for the condensation of oil fractions containing 2-4 diagonally set heat exchangers (15), a washer system (16, 17, 18), and tanks for the oil obtained (21, 22). Preferably inside the reactor there is a screw collar (26) (a spiral belt for scraping/moving the load).

## Description

The subject of the invention is a method for the thermal decomposition of waste made of elastomers, including post-use and post-production rubber waste. Additionally, the subject of the invention is a reactor and a plant for the thermal decomposition of hazardous waste such as used tyres.

From the patent specification CA2194505 there is known a pyrolysis plant system comprising a horizontal rotary drum (reactor) rotating in a thermal insulation. Through a drum outlet a stationary (i.e. non-rotating) tube is introduced into the drum, said tube intended to collect gases and vapours from the pyrolysis process, permanently seated outside the drum. The tube also contains a filter battery separating solids from the gas phase.

A thermal insulation shell depicted in the example (page 12 line 25) is built with ceramic panels located in a cylindrical steel jacket. The shell has at its bottom a gap running along the drum's axis of rotation, said gap housing gas burner nozzles to heat the drum.

From the patent specification EP0853114 there is known a batch pyrolysis process for the recycling of hydrocarbons containing used material, which process includes the following steps (page 2 line 11 and further):
- loading the used material to a rotary reactor, closing the reactor and removing oxygen from the reactor,
- rotating the reactor around its axis while heating it from the outside until an exothermic reaction is initiated inside it,
- controlling pressure inside the reactor in a range from atmospheric pressure to overpressure after initialization and during the course of the exothermic reaction to prevent secondary cracking reactions,
- continuing the rotation and heating of the reactor with simultaneous discharging from the reactor of any condensable vapours and gaseous hydrocarbons produced in said exothermic reaction,
- condensing said vapours to oil and separately collecting gaseous hydrocarbons,
- discharging all solid residue from the reactor.

Process control parameters are (p. 7 lines 1-11): pressure, temperature, oxygen, carbon dioxide and total hydrocarbons content. Data from measuring sensors for these parameters are transferred to a central computer that controls the operation of the pyrolysis plant.

The application of a ceramic thermal insulation results in a significant weight of the whole plant, which in turn requires appropriately thick and strong foundation. In addition, ceramic insulation cools down quite slowly, which may require a long time before the reactor can be unloaded.

Therefore there is a need to develop a simple, safe and effective device operating in a periodic mode (batch), easily adjustable to processing of any type of waste in an effective and more economical (more efficient) way.

### THE ESSENCE OF THE INVENTION

The subject of the present invention is a method for air-sealed thermal decomposition of elastomer waste, especially tires, with discharge of post-process gases from the thermal decomposition to the separation of the liquid and gas products, is characterized by the fact that the thermal decomposition is carried out in an indirectly heated reactor with a horizontal axis of rotation with a movable bed at a temperature 320-400°C and under a pressure in the range between atmospheric pressure and gauge pressure up to 0.5 bar, whereas during the loading of the reactor with waste there is added the heaviest fraction from the products separation system in the amount of approx. 0,2-0,5% by weight of the waste and the same amount of water.

Preferably, an oxygen-free atmosphere is maintained in the reactor by an air-tight closure and/or using nitrogen.

Preferably, at the end of the thermal decomposition process, when no liquid fraction can be seen in a reactor sight glass, the temperature is increased to 420-480°C to remove the remaining hydrocarbons from the pores of the carbonized residue, in order to obtain the desired quality. This results in achieving a carbonized residue having desired higher quality and easier to manage.

The products of the thermal decomposition of elastomers are: light oil and heavy oil (liquid fraction), post-process gases (volatile fraction) as well as carbonized residue and metal residue (solid fraction). In the case of tyres, one additionally obtains wire (steel cord) from tyre reinforcement.

In the case of management of waste tires of motor/other vehicles, as a rule, depending on the types of used tires, the following is obtained by thermal decomposition process: about 20 to 40% of carbonized residue, 35 to 60% of post-process oil, and 5 to 20% of gas fraction, as well as 10-15% of metallic residue. The oil and gas products are used as fuel in the thermal decomposition process, and their surplus is stored. All products are suitable for use in the chemical, steel, automotive industry, etc.

Unexpectedly, it turned out that adding to the process a small amount of one of its products, ie. the heaviest oil fraction from the stage of products separation significantly facilitates the initiation of the thermal decomposition reaction and lowers the initiation temperature.

The subject of the present invention is also a plant for the thermal decomposition of elastomer waste, said plant containing the following equipment and systems:
- a rotating, cylinder-shaped steel reactor with a horizontal axis of rotation, embedded on high temperature resistant bearings, completely enclosed in a steel shell thermally insulated with fire-resistant mineral wool, whose lower part underneath the reactor includes a chamber with a burner unit to heat the reactor; at one end the reactor has a sealed window for batch loading of the raw material, and at the other end there is an outlet pipe to discharge vapours formed in the process, said outlet pipe connected through an articulated connection and a mechanical seal followed by a flexible pipe expansion joint to a separator of liquid and gas product fractions;
- a product separator provided with a pipe with a valve whose outlet is directed vertically into the atmosphere. The separator's role is to separate the vapour stream discharged from the reactor into a gas phase (post-process gas), heavy fuel oil and light oil fraction, and, to secure the safety of the process, to discharge into the atmosphere the excess steam necessary in the early stages to remove oxygen from the plant.

Preferably, the reactor contains in its interior, in the cylindrical inner surface, a screw collar (a spiral scraping and forwarding belt) to enable the flow of the bed and to form a so-called braid of braided steel wire during rotation of the reactor as well as to comminute the carbonized residue.

Preferably the device according to the invention includes the following systems and devices:
- oil fractions condensation system consisting of 2-6, preferably 4, obliquely set heat exchangers connected in series, individually or in pairs, provided with coils with coolant to liquefy the oil fraction;
- a system of scrubbers to purify the post-process gas using water and/or oil to remove particulate matter and other pollutants such as sulphur oxides, nitrogen oxides, and liquid residues. The purpose of this system is to protect the reactor burners against unwanted contaminants that could get in from the oil used as fuel. The scrubber system has its own cooling system which increases their efficiency.
- combustion system for safe burning of excessive amounts of gas in the so-called torch, intended to burn excess gas produced that is not consumed in the process of heating the reactor. This situation occurs very rarely, because usually the entire quantity of gas obtained is consumed;
- tanks for the obtained oil, equipped with transmission valves through the tanks can be connected to external receivers;
- a central control system that controls the process according to needs and, depending on software installed, operating in automatic mode, semi-automatic mode or in a mode similar to manual control; the software may include the full process automation option.
- a system for automatic offtake of carbonized residue, which contains the so-called industrial vacuum cleaner used to suck in and transfer it, connected to the big-bag type bags;
- preferably, primary and secondary gas filters in the form of cylindrical tanks connected to a low pressure gas storage tank. Filters are equipped with dust-related and mesh filter elements. The filtration material is activated carbon.

The plant according to the invention can process both automobile tyre waste as well as other hydrocarbon plastics waste (PA, PP, PET, PE, PUR, etc.).

The method according to the invention is presented below in an example embodiment.

### EXAMPLE 1

Into the reactor 8 Mg of cut tires was loaded, 20 kg of oil from the bottom of the oil separator was added, then the reactor was tightly closed, reactor rotation was begun and burners were started. The concentration of post-process gas was monitored in the stream passing through the pipe with an open valve on the separator. When the gas content exceeded 3%, the valve was closed and the offtake of the thermal decomposition products was started. After the temperature in the reactor reached 360°C, that temperature was maintained automatically while checking through the sight glass at regular intervals if the flow of the liquid fraction was still visible. Once the liquid flow was no longer seen through the sight glass, the temperature in the reactor was increased to 480°C and maintained such for three hours, after which the reactor was cooled down using a blower to a temperature of 40°C and the emptying of the reactor from solid reaction products was started, i.e. removing the steel cord and carbonized residue.

The balance of the process:
- 1. Input: 8: Mg (cut-up tires)
- 2. Oil obtained, as a percentage:: 50+% of load (on the basis of fixed parameters)
- 3. Gas obtained, by volume:: 170+ m³ (burned during the thermal decomposition process - according to the meter)
400+ m³ (stored - according to the meter)
- 4. Carbonized residue, by weight:: 2.8 Mg
- 5. Carbonized residues, by volume:: 35% of input
- 6. Wire (steel cord), by weight:: 0.8 Mg
- 7. Wire (steel cord), by volume:: 10% of input

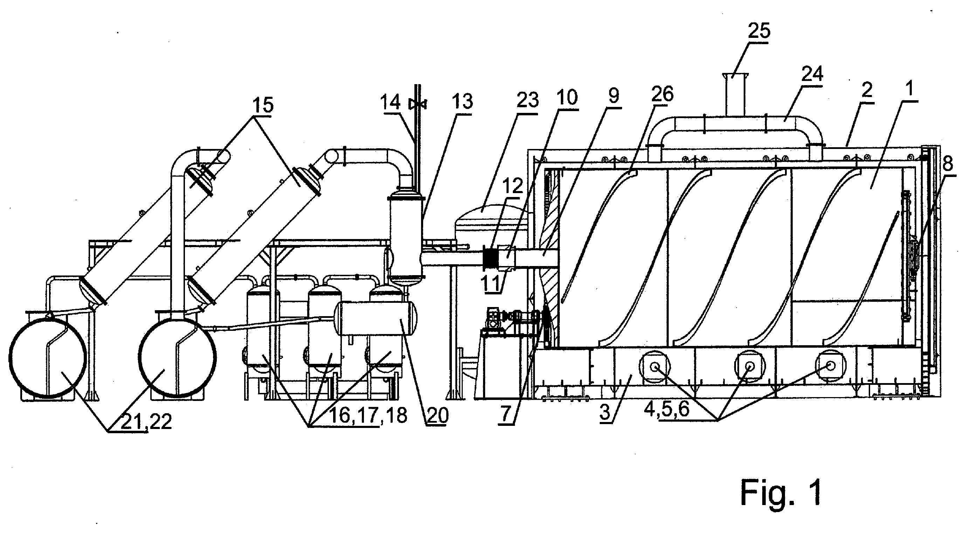

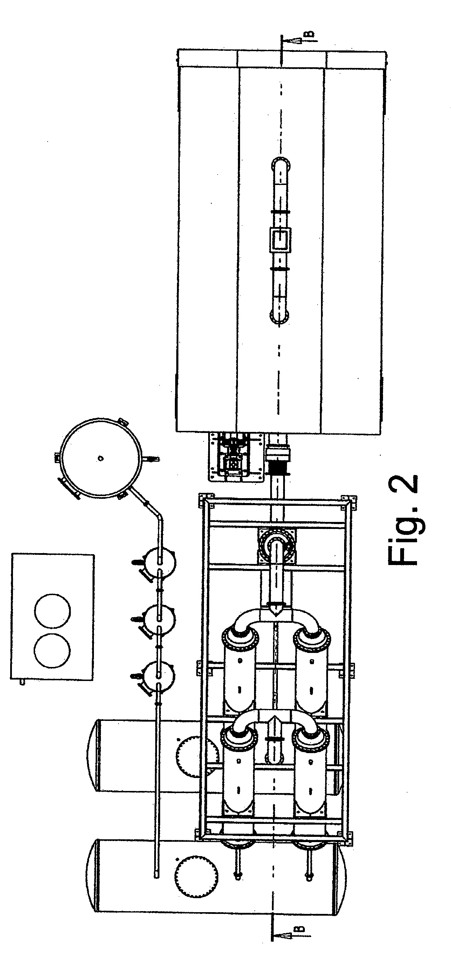

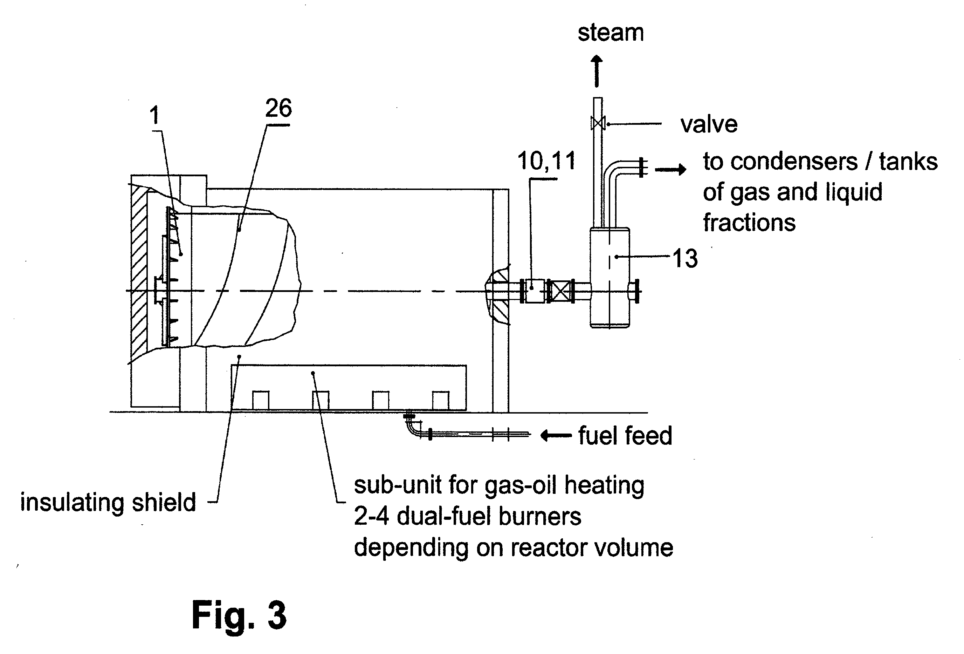

The device according to the invention is presented in an exemplary embodiment in the accompanying drawing, where Fig. 1 depicts a side view of the plant for the thermal decomposition of car tyres, with reactor interior shown in a longitudinal cross-section, Fig. 2 depicts the plant's view from the top, and Fig. 3 depicts a view of the reactor-separator assembly.

### EXAMPLE 2

Reactor 1 is enclosed completely in a steel shell 2, which in its bottom part has a combustion chamber 3 in which outlets of burners 4, 5, 6 are mounted. At the top of the shell 2 there is a flue gas cleaning system 24 comprising a chimney 25. Reactor 1 has the shape of a horizontal cylinder, is embedded in the shell 2 on its ends in a bearing system 7. At one end of the reactor there is a batch window 8 for loading of the raw material and unloading of the solid products (carbonized residue and steel wire), and at the other end there is a reactor outlet pipe 9 running through a coaxially aligned opening in the shell 2. On the cylindrical inner surface of the reactor there is a screw collar 26 for moving the bed and forming the "braid" of steel wire during rotation of the reactor. The end of the outlet pipe 9 is connected through an articulated joint 10 and mechanical seal 11, which is connected, through a pipe expansion joint 12, to a separator 13 which separates the liquid fraction products from the gas fraction. Separator 13 comprises a pipe 14 to discharge moisture to atmosphere, said pipe provided with a valve. Separator outlet is connected to a liquid products condenser section containing four obliquely set heat exchangers 15. The condenser section is connected to a system of water scrubbers, 16,17, 18, provided with its own cooling system. The scrubbers 16, 17 and 18 rid the combustible gas products of solids, sulphur oxides, nitrogen oxides, and liquid residues. The scrubber cooling system operates with water in a closed circuit, its function is to safeguard and improve the performance of the scrubbers. Gas products are stored in a gas tank 20, and liquid products in liquid oil tanks 21 and 22. The plant also includes a process water tank 23.

## Claims

1. A method for air-sealed thermal decomposition of elastomer waste, especially tires, with discharge of post-process gases from the thermal decomposition to the separation of the liquid and gas products, **characterized in that** the thermal decomposition is carried out in an indirectly heated reactor with a horizontal axis of rotation with a movable bed at a temperature 320-400°C and under a pressure in the range between atmospheric pressure and gauge pressure up to 0.5 bar, whereas during the loading of the reactor with waste raw material there are added the heaviest fraction from the products separation system in the amount of 0,2 - 0,5% by weight of the waste raw material, and the same amount of water.

2. Method according to claim 1, **characterised in that** an oxygen-free atmosphere is maintained in the reactor by an air-tight closure and/or using nitrogen.

3. Method according to claim 1 or 2, **characterised in that** at the end of the thermal decomposition process, when no liquid fraction can be seen in a reactor sight glass, the temperature is increased to 420-480°C to remove the remaining hydrocarbons from the pores of the carbonized residue, in order to obtain the desired quality.

4. A device for thermal decomposition of elastomer waste, especially car tyres, **characterised in that** it includes a rotating steel reactor (1) in the shape of a cylinder with a horizontal axis of rotation embedded on high temperature resistant bearings, completely enclosed in a steel shell (2) thermally insulated with fireproof mineral wool, whereas at one end of the reactor (1) has a sealed loading window (8) for the loading of the raw materials, and at the other end of the reactor there is an outlet pipe (9) interconnected via an articulated joint (10) and a mechanical seal (11) followed by a flexible pipe expansion joint (12) with a product separator (13) equipped with a pipe (14) with an outlet into the atmosphere, said pipe equipped with a valve.

5. The device according to claim 4, **characterised in that** the reactor comprises in its inside, on the cylindrical internal surface, a screw collar (26) (a spiral belt for scraping and forwarding of the raw material).

6. The device according to claim 4, **characterised in that** it comprises, connected to the product separator (13), an oil fractions condensation system consisting of 2-6, preferably 4, obliquely set heat exchangers connected in series individually or in pairs, provided with coils with a coolant.

7. The device according to claim 4 or 5 or 6, **characterised in that** it comprises a scrubber system (16, 17, 18) for the purification of the post-process gas, said scrubbers having their own cooling system.

8. The device according to claim 4, **characterised in that** it comprises the following systems and devices:
- a system for the safe burning of excess gas produced;
- oil tanks (21, 22) and gas tank (20), equipped with transmission valves to connect the tanks with external receivers;
- a process water tank (23);
- a central control system to control the process in automatic mode, semi-automatic mode or in a mode close to manual control;
- a system for automatic offtake of the carbonized residue, which contains the so-called industrial vacuum cleaner to suck in and transfer the carbonized residue, connected to the big-bag type bags;
- preliminary and final gas cleaning filters in the form of cylindrical tanks connected to the low pressure gas tank, equipped with particulate filter elements and mesh filter elements with activated carbon being the filtering filling.
